(19) Europäisches Patentamt
European Patent Office
Office européen des brevets

(11) **EP 1 440 293 B1**

(12) **EUROPEAN PATENT SPECIFICATION**

(45) Date of publication and mention of the grant of the patent:
**15.04.2015 Bulletin 2015/16**

(51) Int Cl.:
*G01F 1/66* *(2006.01)*  *G01M 3/24* *(2006.01)*
*F17D 5/06* *(2006.01)*  *E03B 7/00* *(2006.01)*

(21) Application number: **02774975.3**

(22) Date of filing: **01.11.2002**

(86) International application number:
**PCT/GB2002/004971**

(87) International publication number:
**WO 2003/040664 (15.05.2003 Gazette 2003/20)**

(54) **ACOUSTIC FLOW METER IN THE FORM OF A VALVE KEY**

AKUSTISCHER DURCHFLUSSMESSER IN FORM EINES VENTILSCHLIESSKÖRPERS

DEBITMETRE ACOUSTIQUE SOUS FORME DE CLE DE VANNE

(84) Designated Contracting States:
**AT BE BG CH CY CZ DE DK EE ES FI FR GR IE IT LI LU MC NL PT SE SK TR**

(30) Priority: **03.11.2001 GB 0126453**

(43) Date of publication of application:
**28.07.2004 Bulletin 2004/31**

(73) Proprietor: **RPS Water Services Limited Exeter,**
**Devon EX2 8PF (GB)**

(72) Inventor: **ARSCOTT, Arthur**
**Exeter**
**Devon EX2 8PF (GB)**

(74) Representative: **Craske, Stephen Allan et al**
**Craske & Co.**
**Queensgate House**
**48 Queen Street**
**Exeter EX4 3SR (GB)**

(56) References cited:
DE-A- 3 301 855    US-A- 2 153 254
US-A- 4 013 905    US-A- 5 083 452

• FUCHS H V ET AL: "AKUSTISCHE LECKORTUNG BEI FERNWAERMELEITUNGEN" TECHNISCHES MESSEN TM, R.OLDENBOURG VERLAG. MUNCHEN, DE, vol. 58, no. 2, 1 February 1991 (1991-02-01), pages 47-60, XP000208628 ISSN: 0171-8096

**Description**

TECHNICAL FIELD OF THE INVENTION

This invention relates to an acoustic sluice valve flow meter in the form of a valve key.

BACKGROUND

When monitoring for leaks in a water supply network it is common to monitor the flow at a convenient point in the network during off-peak periods, e.g. at night, when water consumption is likely to be low or non-existent. The amount of leakage in the system can then be calculated by subtracting the anticipated usage from the measured flow.

Orifice meters are commonly used to measure flow in pipes. These work on the principle of causing water to flow through a restriction in a pipeline which results in a reduction in pressure. The flow of water can be accurately calculated from the measured pressure reduction taking into account the physical characteristics of the pipe and the restriction.

DE 33 01 855 A1 discloses a method of measuring flow through a fluid supply pipeline provided with a valve, which includes providing an acoustic sensor to sense the level of sound produced by fluid flowing through the pipeline in the vicinity of the valve and converting sounds produced by the flow of fluid through the valve into electrical output signal which varies with flow; progressively closing the valve to measure the peak sound level produced during closure of the valve; and using said measured peak sound level to determine the magnitude of flow through the pipeline.

Since a flow meter must be physically connected into the pipeline it is not always possible to measure flow at any desired position in a supply network. Furthermore, the installation of flow meters at all points where flow is likely to be measured would be prohibitively expensive.

A technique commonly used for pinpointing leaks in water pipelines is to detect the noise generated by the leaking water. This can be done manually by ear using sounding sticks or ground microphones. The loudness of the sound is related to the rate of flow and the proximity of the leak. However, such a technique is only suitable for locating leaks within a relatively small area and cannot be used to provide a quantitative measurement of leakage within a large supply network.

US 2 153 254 discloses a vertical shaft in the form of a drill pipe which includes a flow control valve, and an acoustic sensor is provided for converting sounds produced by the flow of fluid through the valve into an electrical output signal which varies with flow.

The present invention seeks to provide a new and inventive way of providing a reasonably accurate measurement of flow at positions in a supply network where there is no flow meter installed.

SUMMARY OF THE INVENTION

The present invention proposes an acoustic flow meter in accordance with Claim 1 and a method of measuring flow through a fluid supply pipeline provided with a valve in accordance with Claim 9.

BRIEF DESCRIPTION OF THE DRAWINGS

The following description and the accompanying drawings referred to therein are included by way of non-limiting example in order to illustrate how the invention may be put into practice. In the drawings:

Figure 1 is a general side view of an acoustic sluice valve flow meter in accordance with the invention;

Figure 2 is a block circuit diagram of the electronic components of the flow meter;

Figure 3 is a graph showing the variation in an acoustic output signal which is obtained when a valve is closed using the flow meter; and

Figure 4 is a graph relating the true flow values to the values calculated using the flow meter with various kinds of valve.

DETAILED DESCRIPTION OF THE DRAWINGS

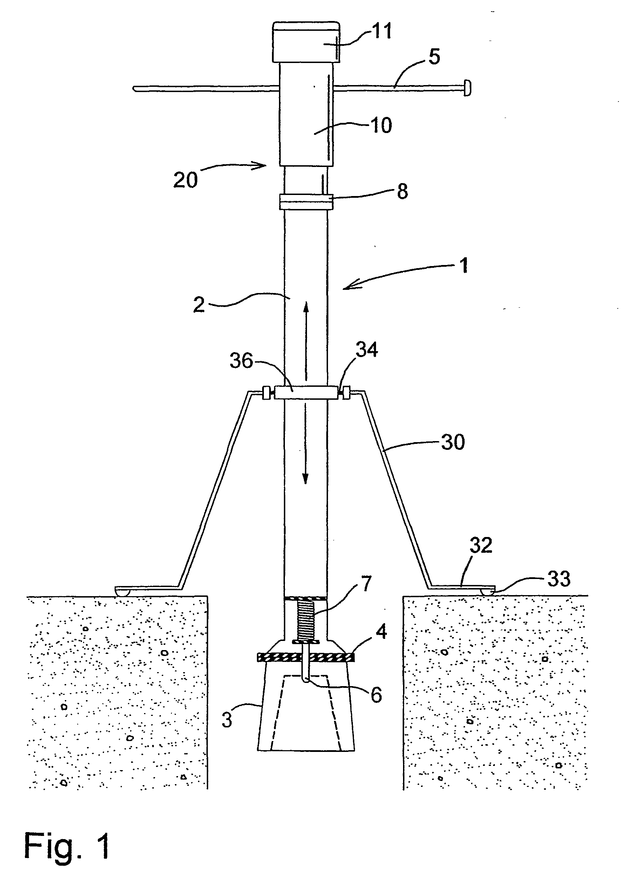

Referring to **Fig. 1**, an acoustic sluice valve flow meter in the form of a valve operating key 1 includes an elongate metal shaft 2 which is shown in an upright position in which it is normally used. At the bottom end of the shaft there is a valve-operating head 3 which is attached by means of a quick-release coupling 4 so that different heads can easily be fitted for operating different kinds of water flow-control valve, e.g. sluice valves, stopcocks and the like. In general, the head 3 may be a hollow shell which is open at the lower end, shaped to fit over and engage the operating member of a suitable valve (not shown). At the top end of the shaft 2 there is a transversely-projecting turning bar 5 by which the key may be manually rotated about the axis of the shaft in order to operate the valve.

An acoustic coupling element 6 is mounted generally co-axially within the shaft 2 to project into the head 3. The coupling element is resiliently biassed by means of a spring 7 in order to ensure firm contact pressure with the valve and thereby provide a good acoustic connection. The element 6 is mechanically coupled through the shaft 2 via a water-tight acoustic coupling 8 to a remotely-located electro-mechanical acoustic sensor indicated at 20. By locating the sensor at the upper end of the shaft 2 the sensor may be protected from physical damage or contamination with water or other substances which may adversely affect its operation. The sensor may be acoustically insulated to reduce pickup of unwanted external noises.

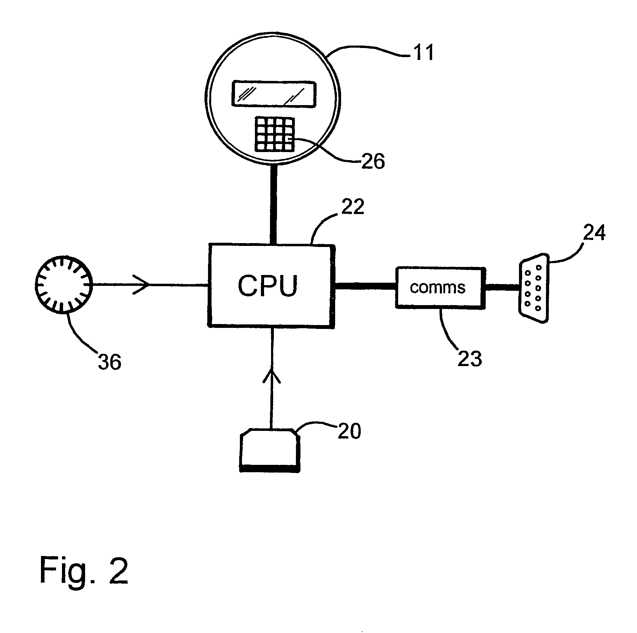

Referring to **Fig. 2,** the sensor 20 operates in the manner of a microphone to convert sounds into electrical signals. The signals may represent the amplitude of sounds received through the coupling element 6 in a simple analogue form or in an encoded form using pulse width modulation, digital encoding etc. The electrical signals from the sensor travel to an electronic processing unit 22 mounted within a water-tight housing 10 (**Fig. 1**) at the top of the shaft 2. The processing unit 22 is connected with a display unit 11 mounted on top of the housing to indicate the flow through the valve, e.g. by means of a digital display, meter, bargraph or the like. In addition, the processing unit is provided with a communications interface 23 and an external communications port 24 to exchange data with a remote monitoring point, e.g. by means of an RS232 or similar serial communication link, or by radio signals, infra red etc. A keypad 26 or similar input device may be provided on the display unit 11 to allow information to be manually input into the processing unit 22 when required.

In order to reduce the pickup of external noises a flexible boot 30 is slidably mounted on the shaft 2, as shown in **Fig. 1.** The boot is of part-conical shape with an outwardly projecting flange 32 at its lower end having a flexible sealing bead 33 on its undersurface. The boot can thus be moved along the shaft to rest on the ground while the head 3 is engaged with the valve. The boot may be coupled to the shaft via a flexible joint 34 allowing the boot to seat on uneven ground. A rotation gauge 36 can be used to couple the boot to the shaft to permit accurate measurement of the angle through which the shaft has been rotated relative to the boot which is held stationary by contact with the ground. The gauge allows accurate setting of the amount by which the valve is opened. The gauge can provide a manual reading and/or electronic data for use by the processor 22.

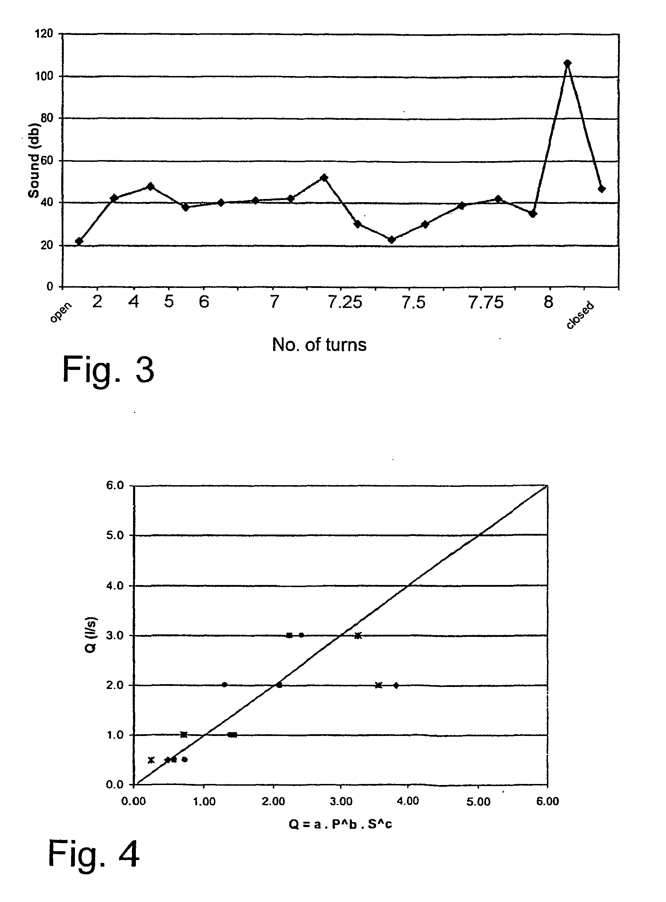

**Fig. 3** shows the variation in sound level as detected by the sensor 20 when the key is used to progressively close a typical gate valve. The graph clearly shows that the sound level reaches a distinct peak just before the valve is fully closed. By measuring the peak sound level as the valve passes through the maximum it is possible to calculate the flow through the pipeline using the formula:

$$ Q = a\, P^b\, S^c $$

where Q is the flow, P is the upstream supply pressure, S is the peak sound level and *a*, *b* and *c* are constants determined by the pipe diameter, the physical characteristics of the valve etc. Since the upstream pressure will usually be known it is therefore possible for the processing unit to accurately calculate the flow from the measured peak sound level.

It has been found that this method of calculating the flow is surprisingly accurate. **Fig. 4** shows the how the actual flow measured using accurate flow measurement equipment is related to the flow measured by means of the present invention using a number of different kinds of valve. In most cases an accuracy to within 10 per cent is possible, which although not as accurate as calibrated orifice meters is sufficient for many purposes.

The level of accuracy can be maximised by manually entering accurate figures for the upstream supply pressure, the diameter of the pipeline and the characteristics of the valve. Users can conveniently be provided with a choice of known valve types from which to select, which automatically enters the appropriate valve parameters. Additional data from the rotation gauge 36 can also be used to ensure that the flow calculation is accurate.

The key thus provides a convenient and simple method of measuring flow to a reasonable level of accuracy without the inconvenience and expense of installing in-line flow meters.

Although the key is intended for use with water control valves it could also be used with valves for controlling the flow of other fluids.

**Claims**

1. An acoustic flow meter including:

   - an elongate shaft (2) having upper and lower ends;
   - a valve-operating head (3) attacked to the lower end of the shaft and adapted to engage and operate a rotary flow control valve; and
   - an acoustic sensor (20), located at the upper end of the shaft, for converting sounds produced by the flow of fluid through the valve into electrical output signal which varies with flow;

   ***characterised by***
   a handle (5) projecting from the upper end of the shaft, said handle being adapted to be used for manually rotating the shaft (2) to progressively close the rotary flow control valve engaged by said valve-operating head (3).

2. An acoustic flow meter according to Claim 1 in which the valve-operating head (3) includes an acoustic coupling element (6) for engagement with the valve, said acoustic coupling element being resiliently-biassed (7) to ensure firm contact pressure with the rotary flow control valve.

3. An acoustic flow meter according to Claim 1 or 2 which includes a processing unit (22) which is arranged to use said electrical output signal to produce a calculated value for the flow through the rotary flow control valve.

**4.** An acoustic flow meter according to Claim 3 which includes a visual display unit (11) for displaying said calculated value.

**5.** An acoustic flow meter according to Claim 3 or 4 which includes an electronic communications port (24) through which the processing unit (22) can transfer data with external equipment.

**6.** An acoustic flow meter according to any preceding claim which includes a boot (30) located about the shaft (2) for contact with a surface surrounding a hole in which the rotary flow control valve is located.

**7.** An acoustic flow meter according to Claim 6 in which the boot (30) is rotatably mounted relative to the shaft (2).

**8.** An acoustic flow meter according to Claim 7 which includes a rotation gauge (36) for providing an indication of the relative rotation between the boot (30) and the shaft (2).

**9.** A method of measuring flow through a fluid supply pipeline provided with a flow control valve, which includes:

- providing an acoustic sensor (20) to sense the level of sound produced by fluid flowing through the pipeline in the vicinity of the flow control valve and converting sounds produced by the flow of fluid through the flow control valve into electrical output signal which varies with flow;
- progressively closing the flow control valve to measure the peak sound level produced during closure of the flow control valve; and
- using said measured peak sound level to determine the magnitude of flow through the pipeline;

***characterised in that***

- the acoustic sensor (20) is located at the upper end of an elongate shaft (2) having upper and lower ends with a valve-operating head (3) attached to the lower end and a handle (5) projecting from the upper end;
- the valve-operating head (3) is engaged with the flow control valve; and
- the handle (5) is used to manually rotate the shaft (2) to progressively close the flow control valve.

**10.** A method according to Claim 9, in which the magnitude of the flow through the pipeline is calculated by means of a processing unit (22) taking into account at least one of:

- the upstream fluid supply pressure in the pipeline;
- the characteristics of the flow control valve; and
- the diameter of the pipeline.

**Patentansprüche**

**1.** Akustischer Durchflussmesser mit:

- einem länglichen Schaft (2) mit oberen und unteren Enden,
- einem Ventilbetätigungskopf (3), der an dem unteren Ende des Schaftes angebracht ist und dazu ausgestaltet ist, an einem Drehdurchflusssteuerungsventil anzusetzen und es zu betätigen, und
- einem an dem unteren Ende des Schafts angeordneten akustischen Sensor (20) zum Umwandeln von Geräuschen, die durch den Durchfluss von Fluid durch das Ventil erzeugt werden, in ein elektrisches Ausgabesignal, das mit dem Durchfluss variiert,

**gekennzeichnet durch**
einen von dem oberen Ende des Schafts abstehenden Griff (5), wobei der Griff dazu ausgestaltet ist, dazu verwendet zu werden, um den Schaft (2) manuell zu drehen, um das Drehdurchflusssteuerungsventil, an dem der Ventilbetätigungskopf (3) angreift, zunehmend zu schließen.

**2.** Akustischer Durchflussmesser nach Anspruch 1, bei dem der Ventilbetätigungskopf (3) ein akustisches Kopplungselement (6) zur Anlage an dem Ventil umfasst, wobei das akustische Kopplungselement elastisch vorgespannt (7) ist, um festen Druckkontakt mit dem Durchflusssteuerungsventil sicherzustellen.

**3.** Akustischer Durchflussmesser nach Anspruch 1 oder 2, der eine Prozessoreinheit (22) aufweist, die dazu eingerichtet ist, um das elektrische Ausgabesignal zur Erzeugung eines berechneten Wertes für den Durchfluss durch das Drehdurchflusssteuerungsventil zu verwenden.

**4.** Akustischer Durchflussmesser nach Anspruch 3, der eine visuelle Anzeigeeinheit (11) zum Anzeigen des berechneten Wertes umfasst.

**5.** Akustischer Durchflussmesser nach Anspruch 3 oder 4, der einen elektronischen Kommunikationsanschluss (24) aufweist, durch den die Prozessoreinheit (22) Daten mit externen Geräten transferieren kann.

**6.** Akustischer Durchflussmesser nach einem der vorhergehenden Ansprüche, der eine um den Schaft (2) herum angeordnete Manschette (30) zum Kontakt mit einer Oberfläche aufweist, die ein Loch umgibt, in dem das Drehdurchflusssteuerungsventil liegt.

**7.** Akustischer Durchflussmesser nach Anspruch 6, bei dem die Manschette (30) drehbar zu dem Schaft (2) angebracht ist.

**8.** Akustischer Durchflussmesser nach Anspruch 7, der eine Gradskala (36) aufweist, um eine Anzeige der relativen Drehung zwischen der Manschette (30) und dem Schaft (2) zu bieten.

**9.** Verfahren zum Messen des Durchflusses durch eine Fluidversorgungsleitung, die mit einem Drehdurchflusssteuerungsventil versehen ist, bei dem:

- ein akustischer Sensor (20) bereitgestellt wird, um den Geräuschlevel zu erfassen, der von durch die Leitung in der Nähe des Drehdurchflusssteuerungsventils fließendes Fluid erzeugt wird, und um die durch den Durchfluss von Fluid durch das Drehdurchflusssteuerungsventil erzeugte Geräusche in eine elektrisches Ausgabesignal umzuwandeln, das mit dem Durchfluss variiert,
- das Drehdurchflusssteuerungsventil zunehmend geschlossen wird, um den Spitzengeräuschlevel, der während des Schließens des Drehdurchflusssteuerungsventils erzeugt wird, zu messen, und
- der gemessene Spitzengeräuschlevel verwendet wird, um den Wert des Durchflusses durch die Leitung zu bestimmen,

**dadurch gekennzeichnet, dass**

- der akustische Sensor (20) am oberen Ende eines länglichen Schaftes (2) angeordnet ist, der ein oberes und ein unteres Ende hat, wobei ein Ventilbetätigungskopf (3) an dem unteren Ende befestigt ist und ein Griff (5) von dem oberen Ende absteht,
- der Ventilbetätigungskopf (3) in Eingriff mit dem Durchflusssteuerungsventil gebracht wird und
- der Griff (5) dazu verwendet wird, um den Schaft (2) manuell zu drehen, um das Durchflusssteuerungsventil zunehmend zu schließen.

**10.** Verfahren nach Anspruch 9, bei dem der Wert des Durchflusses durch die Leitung mittels einer Prozessoreinheit (22) berechnet wird, wobei wenigstens eines von:

- dem Fluidförderdruck stromaufwärts in der Leitung,

- den Charakteristiken des Durchflusssteuerungsventils und
- dem Durchmesser der Leitung

berücksichtigt wird.

**Revendications**

**1.** Débitmètre acoustique comprenant :

- une tige allongée (2) ayant des extrémités supérieure et inférieure ;
- une tête d'actionnement de vanne (3) fixée à l'extrémité inférieure de la tige et apte à engager et actionner une vanne de régulation de débit rotative ; et
- un capteur acoustique (20), situé à l'extrémité supérieure de la tige, pour convertir des sons produits par l'écoulement de fluide à travers la vanne en signal de sortie électrique qui varie avec le débit ;

**caractérisé par**
une poignée (5) se projetant à partir de l'extrémité supérieure de la tige, ladite poignée étant apte à être utilisée pour faire tourner manuellement la tige (2) pour fermer progressivement la vanne de régulation de débit rotative engagée par ladite tête d'actionnement de vanne (3).

**2.** Débitmètre acoustique selon la revendication 1, dans lequel la tête d'actionnement de vanne (3) comprend un élément de couplage acoustique (6) pour engagement avec la vanne, ledit élément de couplage acoustique étant sollicité élastiquement (7) pour assurer une pression de contact ferme avec la vanne de régulation de débit rotative.

**3.** Débitmètre acoustique selon la revendication 1 ou 2, qui comprend une unité de traitement (22) qui est agencée pour utiliser ledit signal de sortie électrique pour produire une valeur calculée pour le débit à travers la vanne de régulation de débit rotative.

**4.** Débitmètre acoustique selon la revendication 3, qui comprend une unité d'affichage visuel (11) pour afficher ladite valeur calculée.

**5.** Débitmètre acoustique selon la revendication 3 ou 4, qui comprend un port de communication électronique (24) par l'intermédiaire duquel l'unité de traitement (22) peut transférer des données avec un équipement externe.

**6.** Débitmètre acoustique selon l'une quelconque des revendications précédentes, qui comprend un pied (30) situé autour de la tige (2) pour un contact avec une surface entourant un trou dans lequel la vanne de régulation de débit rotative est située.

7. Débitmètre acoustique selon la revendication 6, dans lequel le pied (30) est monté de façon rotative par rapport à la tige (2).

8. Débitmètre acoustique selon la revendication 7, qui comprend une jauge de rotation (36) pour fournir une indication de la rotation relative entre le pied (30) et la tige (2).

9. Procédé pour mesurer un débit à travers une canalisation de distribution de fluide munie d'une vanne de régulation de débit, qui comprend :

     - disposer un capteur acoustique (20) pour détecter le niveau de son produit par le fluide s'écoulant dans la canalisation au voisinage de la vanne de régulation de débit et convertir des sons produits par l'écoulement de fluide à travers la vanne de régulation de débit en signal de sortie électrique qui varie avec le débit ;
     - fermer progressivement la vanne de régulation de débit pour mesurer le niveau sonore de crête produit pendant la fermeture de la vanne de régulation de débit ; et
     - utiliser ledit niveau sonore de crête mesuré pour déterminer la grandeur du débit dans la canalisation ;

     *caractérisé par le fait que*

     - le capteur acoustique (20) est situé à l'extrémité supérieure d'une tige allongée (2) ayant des extrémités supérieure et inférieure, avec une tête d'actionnement de vanne (3) fixée à l'extrémité inférieure et une poignée (5) se projetant à partir de l'extrémité supérieure ;
     - la tête d'actionnement de vanne (3) est engagée avec la vanne de régulation de débit ; et
     - la poignée (5) est utilisée pour faire tourner manuellement la tige (2) pour fermer progressivement la vanne de régulation de débit.

10. Procédé selon la revendication 9, dans lequel la grandeur du débit dans la canalisation est calculée au moyen d'une unité de traitement (22) prenant en compte au moins l'un parmi :

     - la pression amont de distribution de fluide dans la canalisation ;
     - les caractéristiques de la vanne de régulation de débit ; et
     - le diamètre de la canalisation.

Fig. 1

Fig. 2

## Fig. 3

## Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3301855 A1
- US 2153254 A